# EUROPÄISCHE PATENTSCHRIFT

(11) **EP 4 726 427 B1**
(45) Veröffentlichungstag und Bekanntmachung des Hinweises auf die Patenterteilung: **05.08.2026**
(21) Anmeldenummer: 24206145.5
(22) Anmeldetag: 11.10.2024
(51) Int. Cl.: G01S 7/48, G01S 7/4913, G01S 7/4912, G01S 17/34

(54) **FMCW-DISTANZMESSVORRICHTUNG**
FMCW DISTANCE MEASURING DEVICE
DISPOSITIF DE MESURE DE DISTANCE FMCW

(43) Veröffentlichungstag der Anmeldung: 15.04.2026
(73) Patentinhaber: SICK AG, 79183 Waldkirch (DE)
(72) Erfinder: Baldischweiler, Boris, 79296 Reute (DE); Maier, Christoph, 79286 Glottertal (DE)
(74) Vertreter: Manitz Finsterwald Patent- und Rechtsanwaltspartnerschaft mbB

(56) Entgegenhaltungen:
- EP-A1- 3 919 933
- EP-B1- 3 913 673
- WO-A1-2023/003550
- US-A1- 2024 045 061
- US-A1- 2024 094 387

## Beschreibung

Die Erfindung betrifft eine FMCW-Distanzmessvorrichtung sowie ein FMCW-Distanzmessverfahren.

In der modernen Sensortechnik spielt die präzise und zuverlässige Messung von Entfernungen eine zentrale Rolle, insbesondere in Anwendungen wie autonomem Fahren, Robotik, industrieller Automatisierung und optischer Messtechnik. Ein weit verbreitetes Verfahren zur Bestimmung der Entfernung eines Objekts ist das Frequency-Modulated Continuous Wave (FMCW) Verfahren. Hierbei handelt es sich um eine Methode, die auf der Verwendung eines optisch durchgestimmten Lichtstrahls basiert, um die Entfernung eines Objekts durch Messung der Zeitverzögerung des reflektierten Empfangslichtstrahls zu ermitteln.

Beim FMCW-Verfahren wird ein Lichtstrahl durch eine kontinuierliche Änderung seiner Frequenz moduliert und das modulierte Signal ausgesendet. Ein Teil des ausgesendeten Signals wird am Zielobjekt reflektiert und von einem Lichtempfänger empfangen, während ein anderer Teil des Sendesignals direkt zum Empfänger geleitet wird. Da das reflektierte Signal eine gewisse Laufzeit zum Ziel und zurück hat, kommt es mit einer Phasenverschiebung und einer veränderten Frequenz beim Empfänger an. Der Empfänger mischt das direkt zum Empfänger geleitete Sendesignal mit dem reflektierten Empfangssignal, wodurch ein periodisches Signal, das sogenannte Beatsignal, mit der Differenzfrequenz entsteht. Die Frequenz des Beatsignals, die sogenannte Beatfrequenz, ist proportional zur Entfernung des Zielobjekts, sodass durch eine Fourier-Transformation des elektrischen Signals die Entfernung bestimmt werden kann.

FMCW-Verfahren haben zahlreiche Vorteile wie beispielsweise eine hohe Genauigkeit, eine hohe Auflösung und der Robustheit gegenüber Umwelteinflüssen. Jedoch ist die Ermittlung der Beatfrequenz meist mit hohem Aufwand sowie hohen Anforderungen an die jeweiligen Komponenten verbunden, welche zur Ermittlung der Beatfrequenz verwendet werden. Eine der größten Hürden ist die Notwendigkeit hochauflösender und schneller Analog-Digital-Wandler (ADCs), um das elektrische Beatsignal mit ausreichend hoher Genauigkeit und Geschwindigkeit abtasten zu können. Diese ADCs sind nicht nur kostspielig, sondern erhöhen auch die Komplexität des Systems erheblich. Dies gilt insbesondere für Anwendungen, bei denen aufgrund der vergleichsweise langsameren Messgeschwindigkeit des FMCW-Verfahrens mehrere Kanäle simultan ausgewertet werden müssen. Die parallele Auswertung mehrerer Kanäle erfordert zusätzliche ADCs, was die Kosten weiter in die Höhe treibt und das Design der Messvorrichtungen verkompliziert.

US 2024/045061 A1 offenbart ein FMWC-Sensorsystem, bei dem ein Sendesignal und ein von einem Objekt zurückgestrahltes Empfangssignal mittels eines Pixels optisch gemischt werden, wobei das Pixel einen Komparator umfassen kann, welcher ein binäres Signal ausgibt. EP 3 913 673 B1 beschreibt einen Schaltungsaufbau, der einen Photodetektor mit zwei unterschiedlichen Ausleseterminals umfasst, die jeweils mit separaten Ausleseschaltungen verbunden sind und unterschiedliche Auslesespannungen liefern, wobei ein Common-Mode-Analog-Digital-Wandler (ADC) so ausgelegt ist, dass er eine Spannungsquelle und einen Common-Mode-Generator als Eingänge nutzt, wobei der Common-Mode-Generator aus den beiden Auslesespannungen eine gemeinsame Spannung erzeugt. WO 2023/003550 A1 bezieht sich auf einen optischen Kohärenzsensor, der mehrere kohärente Sensoreinheiten sowie einen Polarisationswandler umfasst, der auf diesen Sensoreinheiten angeordnet ist, wobei jeder dieser Sensoreinheiten einen polarisationselektiven optischen Koppler umfasst. US 2024/094387 A1 beschreibt ein optisches FMCW-Sensorsystem, bei dem ein Emissionssignal von einem Photodetektor in ein entsprechendes elektrisches Signal gewandelt wird und ein Lichtempfangssignal von einem Sensor in ein entsprechendes elektrisches Signal gewandelt wird und die elektrischen Signale in einer Signalerzeugungseinheit gemischt werden, um ein Zwischenfrequenzsignal zu erhalten. EP 3 919 933 A1 offenbart ein FMCW-Lidar-System, bei dem ein FMCW-Eingangsstrahl und ein FMCW-Referenzstrahl empfangen wird, diese jeweils in elektrische Signale umgewandelt werden und die so erzeugten elektrischen Signale an eine Steuerungskomponente weitergeleitet werden, um eine Distanz zu einem Objekt zu ermitteln.

Eine Aufgabe der Erfindung besteht somit darin, eine verbesserte FMCW-Distanzmessvorrichtung sowie ein verbessertes FMCW-Distanzmessverfahren bereitzustellen.

Diese Aufgabe wird durch die Gegenstände der unabhängigen Ansprüche gelöst.

Ein erster Aspekt der Erfindung bezieht sich auf eine FMCW-Distanzmessvorrichtung, umfassend:
eine Lichtquelle, insbesondere einen Laser, die einen frequenzmodulierten Sendelichtstrahl als ein Sendesignal mit einem vorbestimmten Frequenzhub erzeugt und in einen Messbereich entsendet;
einen Lichtempfänger, der ausgebildet ist, von Objekten in dem Messbereich zurückgestrahltes Licht als Empfangssignal zu empfangen;
einen Mischer, der ausgebildet ist, zumindest einen Teil des Sendesignals mit dem Empfangssignal zu mischen, um ein Mischsignal zu generieren,
eine Umwandlungseinheit, welche ausgebildet ist, das Mischsignal in ein binäres Signal umzuwandeln, und
eine Auswerteeinheit, welche ausgebildet ist, das binäre Signal in den Frequenzbereich zu transformieren und aus dem transformierten Signal die Frequenz des Mischsignals zu ermitteln und basierend auf der ermittelten Frequenz des Mischsignals die Entfernung zu einem jeweiligen Objekt zu ermitteln.

Anders ausgedrückt, wird das von dem Mischer erzeugte Mischsignal mittels eines binären Signals approximiert, sodass die weitere Datenverarbeitung erleichtert wird. Insbesondere umfasst das binäre Signal im Wesentlichen die Frequenzinformationen des Mischsignals, während die Amplitudeninformationen des Mischsignals zumindest teilweise verworfen werden können. Das binäre Signal ist insbesondere deutlich datenkompakter als das Mischsignal, sodass die Bestimmung der Frequenz des Mischsignals mittels des binären Signals schneller und mit weniger Rechenressourcen erfolgen kann.

Wie bereits beschrieben, erzeugt die Lichtquelle einen frequenzmodulierten Sendelichtstrahl als ein Sendesignal mit einem vorbestimmten Frequenzhub und entsendet diesen Sendelichtstrahl in einen Messbereich. Der Sendelichtstrahl wird von Objekten in dem Messbereich zurückgestrahlt und das zurückgestrahlte Licht als Empfangssignal am Lichtempfänger empfangen. Ein Teil des Sendesignals wird anschließend mit dem Empfangssignal im Mischer zu einem Mischsignal gemischt.

Der Frequenzhub kann beispielsweise dadurch erzeugt werden, dass die Wellenlänge der optischen Strahlung des Sendelichtstrahls z.B. beginnend bei einer unteren Frequenz (fu) in einer Modulationszeitdauer (Tmod) bis zu einer oberen Frequenz (fo) geändert wird (oder umgekehrt). Bei dem Sendesignal handelt es sich somit insbesondere um ein gechirptes Signal. Eine Messdauer (Tmeas), während der die Distanzmessvorrichtung die Mischfrequenz des Mischsignals bestimmt, kann maximal der Modulationszeitdauer abzüglich der Lichtlaufzeit (Ttof; hin- und zurück) bis zu einem Objekt in der maximalen Messentfernung entsprechen (Tmeas = Tmod - Ttof). Die Messdauer ist bevorzugt kürzer als 10 µs, besonders bevorzugt kürzer als 5 µs.

Bei der Mischung des Sendesignals und des Empfangssignals werden somit zwei Signale mit unterschiedlicher Frequenz gemischt. Der Frequenzunterschied zwischen dem Sende- und dem Empfangssignal hängt dabei von der Entfernung des rückstrahlenden Objekts zur Distanzmessvorrichtung ab. Je größer die Entfernung, desto größer ist der Frequenzunterschied. Der Frequenzunterschied wird auch als sogenannte Beatfrequenz bezeichnet.

Bei der Mischung (oder auch Überlagerung) des Sendesignals und des Empfangssignals entsteht ein Mischsignal, welches auch als Beatsignal bezeichnet werden kann, wobei das Mischsignal die Beatfrequenz aufweist, welcher der Differenz der Frequenzen von Sende- und Empfangssignal entsprechen.

Aus der Beatfrequenz, welche durch die Mischung entsteht, kann die Lichtlaufzeit und somit die Entfernung des Objekts geschlussfolgert werden.

Die Ermittlung der Beatfrequenz direkt aus dem Mischsignal ist jedoch mit hohem Aufwand verbunden. Da das Mischsignal insbesondere ein periodisches Signal ist, welches für eine erste Hälfte einer Periode Werte oberhalb eines Schwellenwerts aufweist und für eine zweite Hälfte der zugehörigen Periode Werte unterhalb eines Schwellenwerts aufweist (oder umgekehrt), kann das Mischsignal mittels eines binären Signals vereinfacht werden, indem die Werte oberhalb des Schwellenwerts durch den binären Wert 1 dargestellt werden und Werte unterhalb des Schwellenwerts durch den binären Wert 0 dargestellt werden. Beispielsweise kann der Start einer Periode in dem binären Signal durch einen Wechsel des Werts des binären Signals von 0 auf 1 bzw. von 1 auf 0 angezeigt sein, während das Ende der jeweiligen Periode durch den nächsten Wechsel des Werts des binären Signals von 0 auf 1 bzw. 1 auf 0 angezeigt ist. Basierend auf dieser Vereinfachungsmethodik kann das Mischsignal durch die Umwandlungseinheit in ein binäres Signal umgewandelt werden. Insbesondere umfasst das binäre Signal, zumindest in angenäherter Weise, die Frequenzinformationen des Mischsignals. Auf der Grundlage des binären Signals kann anschließend die Beatfrequenz und die Entfernung zu einem jeweiligen Objekt geschätzt bzw. ermittelt werden. Um die Ermittlung der Beatfrequenz weiter zu erleichtern, kann das Mischsignal außerdem mittels eines Verstärkers, z.B. einem Differenzverstärker, verstärkt werden. Zusätzlich oder alternativ kann das Mischsignal, das, insbesondere elektrische umgewandelte, Empfangssignal und/oder das, insbesondere elektrische umgewandelte, Sendesignal mittels eines jeweiligen Tiefpassfilters gefiltert werden, um das Abtasttheorem einhalten zu können. Zum Beispiel können die Tiefpassfilter durch Kapazitäten im Feedback des Differenzverstärkers gebildet werden.

Der Term "binäres Signal" meint hierin, dass es sich um ein Signal handelt, welches nur zwei mögliche Zustände und/oder Werte, beispielsweise 1 und 0, annehmen kann. Das binäre Signal kann ferner zwei unterschiedliche Spannungspegel annehmen, z.B. "low" und "high".

Die Erfindung hat den Vorteil, dass durch die Verwendung eines binären Signals zur Ermittlung der Beatfrequenz, die Anforderungen an die Komponenten zur Ermittlung der Beatfrequenz deutlich reduziert sind. Insbesondere werden die benötigten Rechenkapazitäten reduziert und die Ermittlung der Beatfrequenz vereinfacht. Durch die reduzierten Anforderungen an die entsprechenden Komponenten werden außerdem die Kosten verringert.

Weitere Ausführungsformen der Erfindung sind der Beschreibung, den Unteransprüchen und den Zeichnungen zu entnehmen.

Erfindungsgemäß umfasst die Umwandlungseinheit zumindest einen Komparator und/oder einen 1-Bit-Analog-Digital-Wandler (1-Bit-ADC), welcher ausgebildet ist, das Mischsignal in ein binäres Signal umzuwandeln, indem der Komparator und/oder der 1-Bit-Analog-Digital-Wandler das Mischsignal mit einem Schwellenwert vergleicht, wobei das binäre Signal einen vorgegebenen ersten Wert aufweist, wenn ein Mischsignalwert größer als der Schwellenwert ist, wobei das binäre Signal einen vorgegebenen zweiten, von dem ersten Wert unterschiedlichen, Wert aufweist, wenn ein Mischsignalwert kleiner als der Schwellenwert ist, wobei der Schwellenwert vorzugsweise einem Mittelwert des Mischsignals entspricht.

Mit anderen Worten wechselt der Ausgang des Komparators und/oder des 1-Bit-ADCs jedes Mal seinen Zustand (von niedrig nach hoch oder umgekehrt), wenn das Beatsignal den Schwellenwert überschreitet oder unterschreitet. Dadurch kann das analoge Mischsignal in ein binäres Signal umgewandelt werden, das eine Folge von Rechteckimpulsen darstellt. Die Frequenz dieser Rechtecksignale entspricht insbesondere der Frequenz des Mischsignals. Die Quantisierungsauflösung beträgt insbesondere 1 Bit. Grundsätzlich stehen Quantisierung und Abtastrate im Verhältnis zueinander. Eine niedrigere Quantisierungsauflösung kann also mit einer höheren Abtastrate ausgeglichen werden. Um eine ausreichende Signalqualität bereitstellen zu können, kann die Abtastrate des ADCs deshalb größer als das 2-fache, 3-fache, 4-fache, 6-fache, 8-fache oder 10-fache der maximal zu erfassenden Beatfrequenz sein.

Im Folgenden wird nur auf Komparatoren Bezug genommen. Die nachfolgenden Ausführungen gelten jedoch in entsprechender Weise auch für 1-Bit-ADCs.

Der Vorteil der Verwendung von Komparatoren ist, dass Komparatoren weniger anfällig für kleine Amplitudenvariationen im Mischsignal sind. Solange das Mischsignal den Schwellenwert des Komparators überschreitet, wird ein sauberes Rechtecksignal erzeugt, das leicht weiterverarbeitet werden kann. Darüber hinaus können Komparatoren sehr schnell arbeiten, was es ermöglicht, auch hohe Frequenzen des Beatsignals präzise zu erfassen, ohne die komplexen Anforderungen an die Abtastrate eines herkömmlichen ADCs. Es ist zu beachten, dass die Verwendung eines Komparators einen Verlust von Amplitudeninformationen des ursprünglichen Mischsignals zur Folge haben kann, da der Komparator im Wesentlichen die Frequenzinformationen des Mischsignals weitergibt. Dieser Verlust von Amplitudeninformationen wird jedoch bewusst in Kauf genommen, da vor allem die Frequenz des Mischsignals, d.h. des Beatsignals, für die Ermittlung der Distanz relevant ist und hierdurch die Anforderungen an die genutzten Komponenten reduziert werden kann.

Zusätzlich zu den vorstehenden Ausführungen können auch mehrere Komparatoren, insbesondere 2 oder 4, eingesetzt werden, um die Quantisierungsauflösung zu erhöhen. Beispielsweise kann die Quantisierungsauflösung durch den Einsatz von zwei Komparatoren verdoppelt und mit dem Einsatz von 4 Komparatoren vervierfacht werden. Bevorzugt werden maximal 1, 2, 3 oder 4 Komparatoren eingesetzt. Bei der Verarbeitung der zusätzlich entstehenden Signale kann ferner ein SERDES-Block (Serializer-Deserializer-Block) in Kombination mit High-Speed IO-Zellen zur Anwendung kommen, um die Übertragung der Daten zu optimieren. Je nach Anwendungsfall können somit die Performance und Systemkosten optimiert werden.

Gemäß einer Ausführungsform umfasst die Umwandlungseinheit eine Common-Mode-Control-Einheit, welche den Schwellenwert basierend auf dem Mischsignal ermittelt. Die Common-Mode-Control-Einheit kann beispielsweise eine Schaltung sein, welche einen Gleichanteil des Mischsignals derart aufaddiert, dass der Schwellenwert einem Mittelwert des Mischsignals entspricht. Beispielsweise kann das Mischsignal differenziell geführt sein, wobei zwei Leitungen, welche das Mischsignal führen, mit der Common-Mode-Control-Einheit verbunden sind, um die Gleichanteile der in den zwei Leitungen geführten Signal aufzuaddieren und den Mittelwert der aufaddierten Gleichanteile zu erzeugen.

Gemäß einer Ausführungsform ist die Auswerteeinheit ausgebildet, das binäre Signal in vorgegebenen Zeitschritten abzutasten und das abgetastete Signal als Bitstrom auszugeben, wobei ein abgetasteter Wert in dem Bitstrom als 1 dargestellt ist, wenn der abgetastete Wert dem vorgegebenen ersten Wert entspricht, und ein abgetasteter Wert in dem Bitstrom als 0 dargestellt ist, wenn der abgetastete Wert dem vorgegebenen zweiten Wert entspricht. Der Bitstrom enthält insbesondere die Frequenzinformation des Mischsignals. Basierend auf dem Bitstrom kann somit die Beatfrequenz des Mischsignals ermittelt werden. Insbesondere kann basierend auf der Abtastrate bzw. der Länge der vorgegebenen Zeitschritte und anhand der Bitwechsel von 0 zu 1 oder umgekehrt, welche insbesondere den Beginn bzw. das Ende einer Periode angeben, die Frequenz des binären Signals und damit die Frequenz des Mischsignals, d.h. der Beatfrequenz, geschlussfolgert werden. Da es sich bei dem abzutastenden Signal um ein binäres Signal, z.B. ein Rechtecksignal, handelt, ist die Überführung des Signals in den Digitalbereich außerdem auf einfach Weise möglich.

Gemäß einer Ausführungsform sind die Umwandlungseinheit und/oder Auswerteeinheit als Teil eines FPGA ausgebildet. Durch die Reduktion der Quantisierungsauflösung, insbesondere durch die Abstraktion des Mischsignals auf ein binäres Signal, ist die Ermittlung der Beatfrequenz mit geringerem Hardwareaufwand in einem FPGA möglich. Insbesondere können kleine und somit kostengünstige FPGAs zum Einsatz kommen. Mit dem FPGA lässt sich die Auswertung also besonders effizient gestalten. Die vollständige, insbesondere digitale, Datenverarbeitung kann somit auf dem FPGA laufen.

Gemäß einer Ausführungsform erfolgt die Mischung optisch oder elektrisch. Bei der optischen Mischung umfasst der Mischer zumindest eine Photodiode, wobei die Photodiode zumindest einen Teil des Sendesignals und das Empfangssignal mischt und in ein elektrisches Mischsignal umsetzt. Insbesondere wird das Sendesignal und das Empfangssignal jeweils in ihrer Lichtstrahlform überlagert, um ein optisches Mischsignal zu erzeugen, welches anschließend beispielsweise mittels der Photodiode in ein elektrisches Mischsignal umgewandelt wird. Erfolgt die Mischung des Sende- und Empfangssignals optisch, so kann die Mischung zur Erzeugung additiver und subtraktiver Mischfrequenzen führen, wobei in diesem Fall die additiven Frequenzen jeweils mittels eines Tiefpassfilters ausgefiltert werden können, da diese Frequenzen nicht zur Weiterverarbeitung gedacht sind. Insbesondere können in einem solchen Fall der Lichtempfänger und der Mischer als gemeinsames Bauteil ausgestaltet sein.

Alternativ kann das Sendesignal mittels einer Photodiode in ein elektrisches Sendesignal und das Empfangssignal mittels einer Photodiode in ein elektrisches Empfangssignal umgewandelt werden, wobei die Mischung, beispielsweise die Addition oder Multiplikation, des elektrischen Sendesignals und des elektrischen Empfangssignals anschließend mittels eines elektrischen Bauteils, z.B. durch einen Analog Multiplikator, einen Ringmodulator oder einen Differenzverstärker, erfolgen kann.

Es sei klargestellt, dass unter einer Mischung vorliegend sowohl eine Multiplikation als auch eine Addition oder Subtraktion zu verstehen ist. Insbesondere bei einer optischen Mischung (z.B. des Sende- und Empfangssignals) kann eine Multiplikation umfasst sein, wohingegen bei einer elektrischen Mischung (z.B. durch den genannten Differenzverstärker) auch eine Addition oder Subtraktion umfasst sein kann.

Gemäß einer Ausführungsform umfasst der Mischer einen Balance-Optical-Heterodyn-Detektor. Bei der "Heterodyn"-Detektion wird beispielsweise das Empfangssignal mit dem zumindest einen Teil des Sendesignals überlagert. Im Gegensatz zur einfachen Detektion, bei der nur ein Photodetektor verwendet wird, verwendet der "balanced" Detektor beispielsweise zwei Photodetektoren. Insbesondere wird der zumindest eine Teil des Sendesignals mit dem Empfangssignal überlagert und das überlagerte Signal zwei separaten Photodetektoren zugeführt. Hierzu kann der zumindest eine Teil des Sendesignals und das Empfangssignal jeweils mittels eines Lichtstrahlteiler geteilt werden, sodass einem ersten Photodetektor 50% des zumindest einen Teil des Sendesignals und 50% des Empfangssignals zugeführt wird und einem zweiten Photodetektor 50% des zumindest einen Teil des Sendesignals und 50% des Empfangssignals zugeführt wird. Der erste Photodektor gibt insbesondere ein erstes Mischsignal aus, während der zweite Photodetektor ein zweites Mischsignal ausgibt. Vorzugsweise werden das erste Mischsignal und das zweite Mischsignal jeweils mittels eines Transimpedanzverstärkers verstärkt, bevor die Ausgänge der beiden Photodetektoren, d.h. das erste Mischsignal und das zweite Mischsignal, subtrahiert werden. Die Subtraktion erfolgt vorzugsweise mittels eines Differenzverstärkers. Durch diese Subtraktion werden gemeinsame Rauschanteile (z.B. das Rauschen der Lichtquelle oder das thermische Rauschen) herausgefiltert, während das eigentliche Signal (das Differenzsignal) verstärkt wird. Dies führt insbesondere zu einer Verbesserung des Signal-Rausch-Verhältnisses (SNR) und ermöglicht eine genauere Ermittlung des Mischsignals und damit der Mischfrequenz.

Gemäß einer Ausführungsform ist der Lichtempfänger ausgebildet, das Empfangssignal in ein elektrisches Empfangssignal umzuwandeln, wobei ein weiterer Lichtempfänger ausgebildet ist, den zumindest einen Teil des Sendesignals in ein elektrisches Sendesignal umzuwandeln, und der Mischer einen Differenzverstärker umfasst, welcher ausgebildet ist, das elektrische Sendesignal und das elektrische Empfangssignal zu mischen und die Differenz des elektrischen Sendesignals und des elektrischen Empfangssignals verstärkt als Mischsignal auszugeben. Die Mischung des Sendesignals und Empfangssignals erfolgt somit insbesondere elektrisch. Der Differenzverstärker kann die Differenz zwischen elektrischem Sendesignal und elektrischem Empfangssignal derart verstärken, dass eine weitere Verarbeitung der Signale vereinfacht wird. Insbesondere kann hierdurch eine höhere Messauflösung erzielt werden. Grundsätzlich kann jeder beliebige Verstärker verwendet werden, um das Mischsignal zu verstärken, unabhängig davon ob eine elektrische oder optische Mischung erfolgt.

Gemäß einer Ausführungsform sind dem Differenzverstärker ein erster und zweiter Transimpedanzverstärker vorgeschaltet, wobei der erste Transimpedanzverstärker ausgebildet ist, das elektrische Sendesignal zu verstärken und das verstärkte elektrische Sendesignal dem Differenzverstärker zuzuführen, wobei der zweite Transimpedanzverstärker ausgebildet ist, das elektrische Empfangssignal zu verstärken und das verstärkte elektrische Empfangssignal dem Differenzverstärker zuzuführen. Der Vorteil hierbei ist, dass durch die Verwendung der beiden Transimpedanzverstärker das Verstärkerrauschen des Differenzverstärkers reduziert wird.

Es wird darauf hingewiesen, dass auch bei Verwendung eines Balance-Optical-Heterodyn-Detektors, ein Differenzverstärker verwendet werden kann, um das Mischsignal zu verstärken. Beispielsweise kann in einem solchen Fall der Differenzverstärker so beschaltet werden, dass an einem ersten Eingang das elektrische Mischsignal, d.h. das Ausgangssignal des Balance-Optical-Heterodyn-Detektors, und an dem anderen Eingang Masse angeschlossen ist.

Gemäß einer nicht beanspruchten Ausführungsform ist die Auswerteeinheit ausgebildet, unter Verwendung des Bitstroms mittels eines neuronalen Netzes eine Frequenz des Mischsignals zu ermitteln und basierend auf der ermittelten Frequenz des Mischsignals die Entfernung zu einem jeweiligen Objekt zu ermitteln. Das neuronale Netz kann mit Beispieldaten, z.B. Beispielbitfolgen und zugehörigen Beispielfrequenzen, trainiert werden, um aus einem vorliegenden Bitstrom eine zugehörige Frequenz zu ermitteln. Hierzu können im Zuge des Trainings des neuronalen Netzes elektrische Signale, deren Frequenz bekannt ist, mittels eines Komparators wie vorstehend beschrieben in ein binäres Signal umgewandelt und anschließend abgetastet werden, um eine jeweilige Beispielbitfolge zu erhalten. Die Beispielbitfolge und ihre zugehörige Frequenz können dann als Trainingsdaten für das Training des neuronalen Netzes verwendet werden, wobei dem neuronalen Netz die Beispielbitfolgen als Eingabedaten zur Verfügung gestellt werden und das neuronale Netz eine Frequenz als Ausgabewert ausgibt, welche mit der tatsächlichen Frequenz der Beispielbitfolge verglichen werden kann, um die einzelnen Parameter des neuronalen Netzes zu optimieren.

Gemäß einer weiteren nicht beanspruchten Ausführungsform ist die Auswerteeinheit ausgebildet, den Bitstrom in den Frequenzbereich zu transformieren, wobei das neuronale Netz ein CNN (Convolutional Neural Network) umfasst, welches derart trainiert ist, dass das CNN basierend auf dem transformierten Bitstrom eine Frequenz des Mischsignals ermittelt, wobei die Auswerteeinheit ausgebildet ist, basierend auf der ermittelten Frequenz des Mischsignals die Entfernung zu einem jeweiligen Objekt zu ermitteln. Die "Transformation des Bitstroms in den Frequenzbereich" bedeutet beispielsweise, dass der Bitstrom als zeitdiskrete Folge interpretiert wird und mittels einer Fast-Fourier-Transformation (FFT) in den Frequenzbereich transformiert wird. Mit anderen Worten, wird die Frequenzkomponente des Bitstroms ermittelt, welche insbesondere von den Übergängen zwischen den Bits (von 0 zu 1 oder 1 zu 0) abhängt. Ein periodischer Bitstrom kann beispielsweise klare Peaks bei bestimmten Frequenzen aufweisen, während ein zufälliger, d.h. nicht periodischer, Bitstrom ein breiteres Frequenzspektrum aufweisen kann. Das CNN kann beispielsweise derart trainiert sein, dass es die dem Signalpeak zugehörige Frequenz basierend auf den Eingangsdaten, d.h. dem transformierten Bitstrom, schätzt bzw. ermittelt. Der transformierte Bitstrom kann insbesondere eine Form, z. B. eine bestimmte Anzahl an Bits, aufweisen, welche an die vorgegebene Form der Eingangsdaten des CNNs angepasst ist. Beispielweise kann das CNN derart ausgebildet sein, dass es nur Bitströme von n Bits, vorzugsweise 8 Bits, verarbeiten kann. In einem solchen Fall würde die Transformation des Bitstroms derart erfolgen, dass der transformierte Bitstrom genau n Bits umfasst. Für das Training des CNNs können beispielsweise Bitströme, welche die Frequenz eines zugehörigen periodischen Signals, insbesondere ideal, abbilden, verwendet werden. Ferner können die den Bitströmen zugehörigen Frequenzen als Label, d.h. als erwarteter Ausgabewert des CNNS, verwendet werden. Die Bitströme werden mittels der FFT in einen transformierten Bitstrom transformiert, sodass das CNN mit dem transformierten Bitstromdaten trainiert werden kann, wobei das CNN basierend auf der Abweichung des Ausgabewerts des CNNS von dem erwarteten Ausgabewert optimiert wird, insbesondere unter Verwendung des Backpropagationalgorithmus.

Gemäß einer weiteren nicht beanspruchten Ausführungsform ist das neuronale Netz derart trainiert, dass es basierend auf dem Bitstrom, insbesondere ohne eine Transformation des Bitstroms, eine Frequenz des Mischsignals ermittelt, wobei die Auswerteeinheit ausgebildet ist, basierend auf der ermittelten Frequenz des Mischsignals die Entfernung zu einem jeweiligen Objekt zu ermitteln. Beispielsweise handelt es sich bei dem neuronalen Netz um ein Anomaly Detection Neural Network. Das neuronale Netz ermittelt somit die Mischfrequenz insbesondere basierend auf der zeitlichen, d.h. nicht der frequenzbasierten, Darstellung des Bitstroms. Insbesondere ermittelt das neuronale Netz die Mischfrequenz unmittelbar aus dem Bitstrom.

Gemäß einer weiteren nicht beanspruchten Ausführungsform kann die Auswerteeinheit eine logische UND-Operation umfassen und/oder ausführen, welche, insbesondere für sich genommen, eine Multiplikation bewirkt und/oder ersetzt.

Gemäß einer weiteren nicht beanspruchten Ausführungsform kann das neuronale Netz eine logische UND-Operation umfassen und/oder ausführen, welche, insbesondere für sich genommen, eine Multiplikation bewirkt und/oder ersetzt.

Insbesondere wenn die Auswerteeinheit ausgebildet ist, eine Transformation in den Frequenzbereich vorzunehmen, bevorzugt durch Transformation des Bitstroms in den Frequenzbereich, kann in der Transformation eine logische UND-Operation umfasst sein, welche eine Multiplikation bewirkt. Dies ist aufgrund der 1-Bit-Binarisierung mittels des 1-Bit-ADCs möglich, da bei der Verwendung nur eines Bits eine (einzelne) logische UND-Operation einer Multiplikation entspricht. In die logische UND-Operation gehen bevorzugt zwei 1-Bit-Signale ein. Auf diese Weise kann die üblicherweise für eine Fourier-Transformation notwendige Multiplikation vereinfacht in Hardware abgebildet werden.

Auch das neuronale Netz kann dann vereinfacht werden (bzw. kann im Training zu einer einfacheren Lösung finden), da für 1-Bit-Operationen vereinfachte Logikoperationen statt z.B. komplexer Multiplikationen verwendet werden können.

Gemäß einer weiteren nicht beanspruchten Ausführungsform ist die Auswerteeinheit ausgebildet, das binäre Signal mittels eines Observerfilters nachzubilden, basierend auf einem Vergleich des nachgebildeten binären Signals mit dem binären Signal eine Frequenz des Mischsignals zu ermitteln und basierend auf der ermittelten Frequenz des Mischsignals die Entfernung zu einem jeweiligen Objekt zu ermitteln. Beispielsweise werden die Filterparameter des Observerfilters, insbesondere kontinuierlich, so optimiert, dass der Fehler, d.h. die Differenz, zwischen dem binären Signal und dem nachgebildeten binären Signal möglichst klein ist. Basierend auf den optimierten Filterparametern kann die Frequenz des nachgebildeten Signals ermittelt und die ermittelte Frequenz als Frequenz des Mischsignals festgelegt werden.

Erfindungsgemäß ist die Auswerteeinheit ausgebildet, das binäre Signal in den Frequenzbereich zu transformieren und aus dem transformierten Signal die Frequenz des Mischsignals zu ermitteln und basierend auf der ermittelten Frequenz des Mischsignals die Entfernung zu einem jeweiligen Objekt zu ermitteln. Beispielsweise kann das Signal mittels Fast-Fourier-Transformation (FFT) das binäre Signal in den Frequenzbereich transformieren und mittels bekannter Analysemethoden die Frequenz aus der FFT des binären Signals ermittelt. Zusätzlich oder alternativ kann die Auswerteeinheit ausgebildet sein, den Bitstrom in den Frequenzbereich zu transformieren und aus dem transformierten Bitstrom die Frequenz des Mischsignals mittels bekannter Analysemethoden zu ermitteln. Darüber hinaus können im Frequenzraum vorteilhafterweise auch Signalpeaks der Oberwellen des Ausgangssignals ausgewertet werden. Dies erhöht die Genauigkeit, mit der die Frequenz der Grundwelle, d.h. die Beatfrequenz, bestimmt werden kann und verbessert so letztlich den Signal-Rausch-Abstand weiter.

In einer bevorzugten Ausführungsform kann die FMCW-Distanzmessvorrichtung bevorzugt mehrere Messkanäle umfassen, wobei jeder Messkanal jeweils eine Lichtquelle, einen Lichtempfänger und einen Mischer aufweist. Eine gemeinsame Umwandlungseinheit kann dazu ausgebildet sein, die Mischsignale der jeweiligen Messkanäle in binäre Signale umzuwandeln. Eine gemeinsame Auswerteeinheit kann dazu ausgebildet sein, basierend auf den binären Signalen eine Entfernung zu einem jeweiligen Objekt zu ermitteln. Bevorzugt können die gemeinsame Umwandlungseinheit und/oder die gemeinsame Auswerteeinheit als Teil eines einzelnen FPGAs ausgebildet sein. Weiter bevorzugt werden die Mischsignale der jeweiligen Messkanäle SERDES-Blöcken des FPGAs zugeführt und werden insbesondere durch die SERDES-Blöcke jeweils in ein binäres Signal umgewandelt. Auf diese Weise lässt sich ein parallelisiertes System vorteilhaft realisieren. Insbesondere durch die 1-Bit-Wandlung lässt sich Hardware einsparen, sodass auch ein mehrkanaliges System in einem einzelnen FPGA realisierbar ist.

Ein weiterer Aspekt der Erfindung bezieht sich auf eine FMCW-Distanzmessverfahren, bei welchem:
ein frequenzmodulierter Sendelichtstahl als ein Sendesignal erzeugt und in einen Messbereich entsandt wird, wobei das Sendesignal einen vorbestimmtem Frequenzhub aufweist,
von Objekten in dem Messbereich zurückgestrahltes Licht als Empfangssignal empfangen wird,
zumindest ein Teil des Sendesignals mit dem Empfangssignal gemischt wird, um ein Mischsignal zu generieren,
das Mischsignal in ein binäres Signal umgewandelt wird,
das binäre Signal in den Frequenzbereich transformiert wird und aus dem transformierten Signal die Frequenz des Mischsignals ermittelt wird und basierend auf der ermittelten Frequenz des Mischsignals die Entfernung zu einem jeweiligen Objekt ermittelt wird.

Für das Verfahren gelten die Ausführungen zu der erfindungsgemäßen FMCW-Distanzmessvorrichtung entsprechend, dies gilt insbesondere hinsichtlich Vorteilen und Ausführungsformen.

Nachfolgend wird die Erfindung rein beispielhaft unter Bezugnahme auf die Zeichnungen dargestellt. Es zeigen:
- Fig. 1: eine schematische Darstellung einer FMCW-Distanzmessvorrichtung
- Fig. 2: Bestandteile einer Datenverarbeitungseinheit zur Ermittlung einer Distanz zu einem Objekt
- Fig. 3: eine schematische Darstellung einer FMCW-Distanzmessvorrichtung
- Fig. 4: schematisch einen FPGA einer nicht beanspruchten FMCW-Distanzmessvorrichtung, ches ein CNN zur Bestimmung der Beatfrequenz einsetzt
- Fig. 5: schematisch einen FPGA einer nicht beanspruchten FMCW-Distanzmessvorrichtung, welches ein Anomaly Detection Neural Network zur Bestimmung der Beatfrequenz einsetzt

- Fig. 6: eine schematische Darstellung der Funktionsweise eines Observerfilters

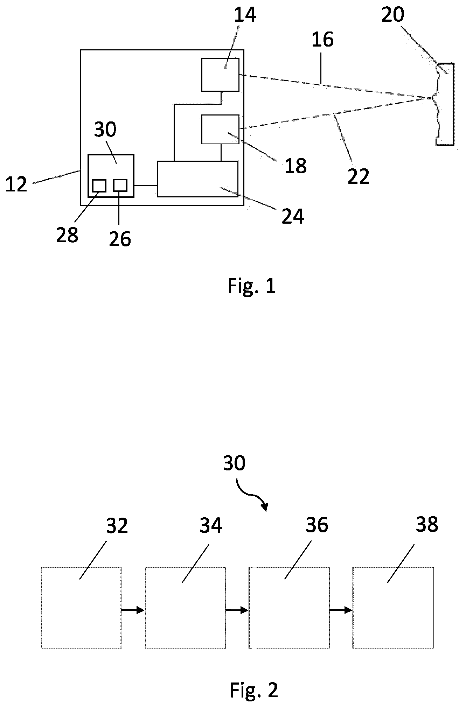

Fig. 1 zeigt eine schematische Darstellung einer FMCW-Distanzmessvorrichtung 12. Die FMCW-Distanzmessvorrichtung 12 umfasst einen Laser 14, der einen frequenzmodulierten Sendelichtstrahl als ein Sendesignal 16 mit einem vorbestimmten Frequenzhub erzeugt und in einen Messbereich entsendet. Ferner umfasst die FMCW-Distanzmessvorrichtung 12 einen Lichtempfänger 18, der von Objekten 20 in dem Messbereich zurückgestrahltes Licht als Empfangssignal 22 empfängt. Das Empfangssignal 22 kann dem Lichtempfänger 18 insbesondere mittels eines nicht gezeigten Zirkulators zugeführt werden, über den das Sendelicht beispielsweise ausgestrahlt und das Empfangslicht aufgenommen und weitergeleitet wird. Ein Mischer 24 der FMCW-Distanzmessvorrichtung 12 mischt zumindest einen Teil des Sendesignals 16 mit dem Empfangssignal 22, um ein Mischsignal zu generieren. Anschließend wandelt eine Umwandlungseinheit 26 das Mischsignal in ein binäres Signal um, während eine Auswerteeinheit 28 basierend auf dem binären Signal die Entfernung zu dem Objekt 20 ermittelt. Die Umwandlungseinheit 26 und die Auswerteeinheit 28 sind als Teil einer Datenverarbeitungseinheit 30, z.B. einem FPGA 31, ausgebildet.

Fig. 2 veranschaulicht die Bestandteile einer Datenverarbeitungseinheit 30 zur Ermittlung einer Distanz zu dem Objekt 20. Die Datenverarbeitungseinheit 30 umfasst einen Differenzverstärker 32, welcher das Mischsignal erzeugt und/oder verstärkt. Beispielsweise kann das zuvor in ein elektrisches Signal umgewandelte Mischsignal differenziell geführt sein, wobei die beiden differenziell geführten Teile des Mischsignals an den Eingängen des Differenzverstärkers 32 angelegt werden, um das verstärkte Mischsignal zu erzeugen. Alternativ kann eine erste Photodiode den zumindest einen Teil des Sendesignals 16 in ein elektrisches Sendesignal umwandeln und eine zweite Photodiode das Empfangssignal 22 in ein elektrisches Empfangssignal umwandeln, wobei das elektrische Sendesignal und das elektrische Empfangssignal an einen jeweiligen Eingang des Differenzverstärkers 32 angelegt werden, um eine Differenz des elektrischen Sendesignals und des elektrischen Empfangssignals zu verstärken und damit das Mischsignal zu erzeugen. Das Mischsignal wird anschließend mittels eine Tiefpassfilter 34 gefiltert, um das Abtasttheorem einhalten zu können. Basierend auf dem verstärkten, gefilterten Mischsignal kann eine Common-Mode-Control-Schaltung 36 einen Schwellenwert für einen Komparator 38 ermitteln, welcher bevorzugt einem Gleichanteil des Mischsignals entspricht, d.h. dem Wert der Mittellinie, um die das periodische Mischsignal schwingt. Basierend auf dem Schwellenwert und dem Mischsignal erzeugt der Komparator 38 ein binäres Signal, z.B. ein rechteckiges Spannungssignal, welches den Wert "high" annimmt, wenn das Mischsignal größer als der Schwellenwert ist, und den Wert "low", wenn das Mischsignal kleiner als der Schwellenwert ist. Unter Verwendung des binären Signals berechnet eine nicht gezeigte Auswerteeinheit 28 anschließend die Entfernung zu dem Objekt 20.

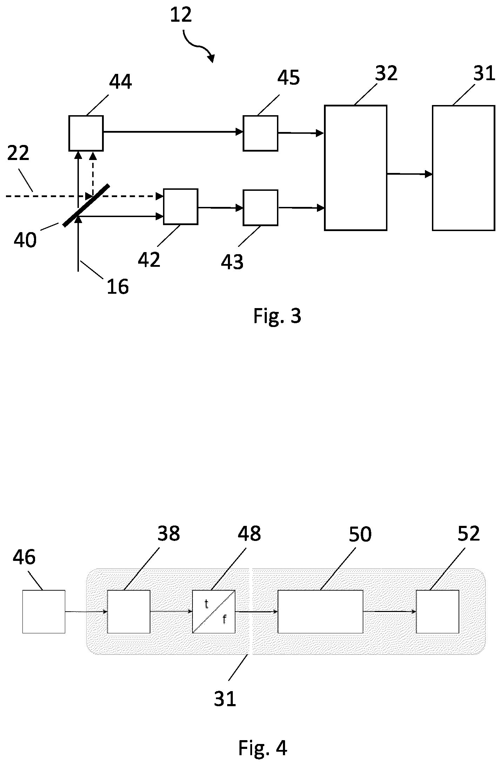

Fig. 3 zeigt eine Ausführungsform einer FMCW-Distanzmessvorrichtung 12, bei der zwei Photodetektoren 42, 44 zur Erzeugung des Mischsignals bzw. des Beatsignals verwendet werden. Der zumindest eine Teil des Sendesignals 16 und das Empfangssignal 22 werden dabei mittels zweier separater Photodetektoren 42, 44 überlagert. Hierzu kann der zumindest eine Teil des Sendesignals 16 und das Empfangssignal 22 jeweils mittels eines Lichtstrahlteiler 40 geteilt werden, sodass einem ersten Photodetektor 42 50% des zumindest einen Teil des Sendesignals 16 und 50% des Empfangssignals 22 zugeführt wird und einem zweiten Photodetektor 44 50% des zumindest einen Teil des Sendesignals 16 und 50% des Empfangssignals 22 zugeführt wird. Der erste Photodektor 42 gibt ein erstes Mischsignal aus, während der zweite Photodetektor 44 ein zweites Mischsignal ausgibt. Das erste Mischsignal wird anschließend mittels eines ersten Transimpedanzverstärkers 43 verstärkt und das zweite Mischsignal wird mittels eines zweiten Transimpedanzverstärkers 45 verstärkt, bevor das verstärkte erste Mischsignal und das verstärkte zweite Mischsignal subtrahiert werden, um das finale Mischsignal zu erzeugen. Die Subtraktion erfolgt mittels eines Differenzverstärkers 32. Durch die Subtraktion werden gemeinsame Rauschanteile (z.B. das Rauschen der Lichtquelle oder das thermische Rauschen) herausgefiltert, während das eigentliche Signal (das Differenzsignal) verstärkt wird. Dies führt insbesondere zu einer Verbesserung des Signal-Rausch-Verhältnisses und ermöglicht eine genauere Ermittlung des Mischsignals und der Mischfrequenz. Zuletzt wird das finale Mischsignal dem FPGA 31 übergeben, welcher das finale Mischsignal in ein binäres Signal umwandelt und basierend auf dem binären Signal die Mischfrequenz des finalen Mischsignals, d.h. die Beatfrequenz, ermittelt und basierend auf der Beatfrequenz die Distanz zu dem Objekt 20 bestimmt bzw. berechnet.

Fig. 4 veranschaulicht schematisch einen FPGA 31 zur Bestimmung der Beatfrequenz mittels eines CNNs 50. Der FPGA 31 ist wie bereits vorstehend beschrieben mit der analogen Vorverarbeitungsschaltung 46 verbunden, welche beispielsweise den Laser 14, den Lichtempfänger 18 und/oder den Mischer 24 umfasst. Der FPGA 31, insbesondere der auf dem FPGA 31 angeordnete Komparator 38, empfängt das Mischsignal und wandelt dieses in ein binäres Signal um, welches anschließend abgetastet wird und als ein Bitstrom von n Bits ausgegeben wird. Basierend auf dem Bitstrom wird anschließend eine FFT 48 durchgeführt, wobei das Ergebnis der FFT 48 als transformierter Bitstrom ausgegeben wird. Unter Verwendung des transformierten Bitstroms wird mittels eines CNNs 50 eine Frequenz des Mischsignals ermittelt, wobei eine Distanzberechnungseinheit 52 basierend auf der ermittelten Frequenz des Mischsignals die Entfernung zu einem jeweiligen Objekt 20 ermittelt.

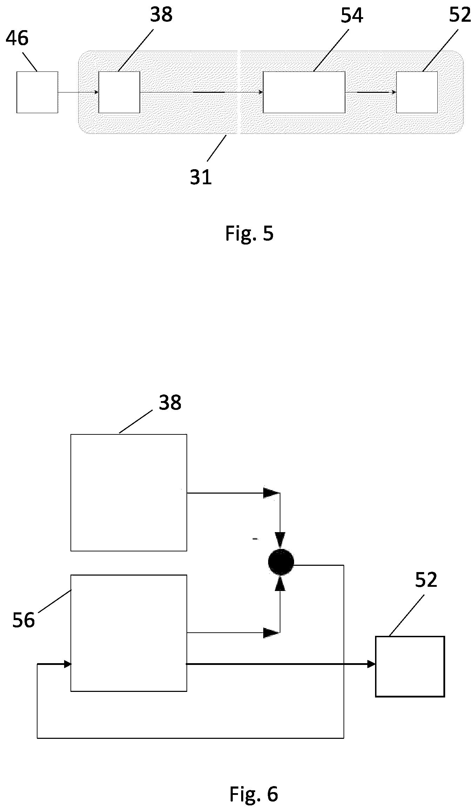

Fig. 5 veranschaulicht schematisch einen FPGA 31 zur Bestimmung der Beatfrequenz mittels eines Anomaly Detection Networks 54. Im Unterschied zur Fig. 4 wird der Bitstrom nicht dazu verwendet, um eine FFT 48 durchzuführen. Vielmehr wird direkt bzw. unmittelbar anhand des aus dem binären Signals ermittelten Bitstroms die Beatfrequenz bzw. die Entfernung zum jeweiligen Objekt 20 mittels eines Anomaly Detection Neural Networks 54 ermittelt.

Fig. 6 zeigt eine schematische Darstellung der Funktionsweise eines Observerfilters 56. Der Observerfilter 56 ist derart ausgebildet, dass er das binäre Signal nachbildet, welches beispielsweise von einem Komparator 38 ausgegeben wird. Die Filterparameter des Observerfilters 56 werden dabei kontinuierlich so optimiert, dass der Fehler, d.h. die Differenz, zwischen dem binären Signal und dem nachgebildeten binären Signal möglichst klein ist. Die Distanzberechnungseinheit 52 kann anschließend auf Basis der optimierten Filterparameter die Frequenz des nachgebildeten Signals ermitteln und die ermittelte Frequenz des nachgebildeten Signals als Frequenz des Mischsignals, d.h. als Beatfrequenz, festlegen.

### Bezugszeichenliste

- 12: FMCW-Distanzmessvorrichtung
- 14: Laser
- 16: Sendesignal
- 18: Lichtempfänger
- 20: Objekt
- 22: Empfangssignal
- 24: Mischer
- 26: Umwandlungseinheit
- 28: Auswerteeinheit
- 30: Datenverarbeitungseinheit
- 31: FPGA
- 32: Differenzverstärker
- 34: Tiefpassfilter
- 36: Common-Mode-Control-Schaltung
- 38: Komparator
- 40: Lichtstrahlteiler
- 42: erster Photodetektor
- 43: erster Transimpedanzverstärker
- 44: zweiter Photodetektor
- 45: zweiter Transimpedanzverstärker
- 46: analoge Vorverarbeitungsschaltung
- 48: FFT
- 50: CNN
- 52: Distanzberechnungseinheit
- 54: Anomaly Detection Neural Network
- 56: Oberserverfilter

## Patentansprüche

1. FMCW-Distanzmessvorrichtung (12), umfassend:
eine Lichtquelle, insbesondere einen Laser (14), die einen frequenzmodulierten Sendelichtstrahl als ein Sendesignal (16) mit einem vorbestimmten Frequenzhub erzeugt und in einen Messbereich entsendet;
einen Lichtempfänger (18), der ausgebildet ist, von Objekten (20) in dem Messbereich zurückgestrahltes Licht als Empfangssignal (22) zu empfangen;
einen Mischer (24), der ausgebildet ist, zumindest einen Teil des Sendesignals (16) mit dem Empfangssignal (22) zu mischen, um ein Mischsignal zu generieren;
eine Umwandlungseinheit (26), welche ausgebildet ist, das Mischsignal in
ein binäres Signal umzuwandeln, wobei die Umwandlungseinheit zumindest einen Komparator oder einen 1-Bit-Analog-Digital-Wandler umfasst, welcher ausgebildet ist, das Mischsignal in ein binäres Signal umzuwandeln, indem der Komparator oder der 1-Bit-Analog-Digital-Wandler das Mischsignal mit einem Schwellenwert vergleicht, wobei das binäre Signal einen vorgegebenen ersten Wert aufweist, wenn ein Mischsignalwert größer als der Schwellenwert ist, wobei das binäre Signal einen vorgegebenen zweiten, von dem ersten Wert unterschiedlichen, Wert aufweist, wenn ein Mischsignalwert kleiner als der Schwellenwert ist, wobei der Schwellenwert vorzugsweise einem Mittelwert des Mischsignals entspricht;
**gekennzeichnet durch**
eine Auswerteeinheit (28), welche ausgebildet ist, das binäre Signal in den Frequenzbereich zu transformieren und aus dem transformierten Signal die Frequenz des Mischsignals zu ermitteln und basierend auf der ermittelten Frequenz des Mischsignals die Entfernung zu einem jeweiligen Objekt (20) zu ermitteln.

2. FMCW-Distanzmessvorrichtung (12) nach Anspruch 1, wobei die Umwandlungseinheit (26) eine Common-Mode-Control-Einheit umfasst, welche den Schwellenwert basierend auf dem Mischsignal ermittelt.

3. FMCW-Distanzmessvorrichtung (12) nach Anspruch 1 oder 2, wobei die Auswerteeinheit (28) ausgebildet ist, das binäre Signal in vorgegebenen Zeitschritten abzutasten und das abgetastete Signal als Bitstrom auszugeben, wobei ein abgetasteter Wert in dem Bitstrom als 1 dargestellt ist, wenn der abgetastete Wert im Wesentlichen dem vorgegebenen ersten Wert entspricht, und ein abgetasteter Wert in dem Bitstrom als 0 dargestellt ist, wenn der abgetastete Wert im Wesentlichen dem vorgegebenen zweiten Wert entspricht.

4. FMCW-Distanzmessvorrichtung (12) nach einem der vorstehenden Ansprüche, wobei die Umwandlungseinheit (26) und/oder Auswerteeinheit (28) als Teil eines FPGA (31) ausgebildet sind.

5. FMCW-Distanzmessvorrichtung (12) nach einem der vorstehenden Ansprüche, wobei die Mischung der Signale optisch oder elektrisch erfolgt.

6. FMCW-Distanzmessvorrichtung (12) nach Anspruch 5, wobei der Mischer (24) einen Balance-Optical-Heterodyn-Detektor umfasst.

7. FMCW-Distanzmessvorrichtung (12) nach Anspruch 5,
wobei der Lichtempfänger (18) ausgebildet ist, das Empfangssignal (22) in ein elektrisches Empfangssignal umzuwandeln,
wobei ein weiterer Lichtempfänger ausgebildet ist, den zumindest einen Teil des Sendesignals (16) in ein elektrisches Sendesignal umzuwandeln, und der Mischer (24) einen Differenzverstärker (32) umfasst, welcher ausgebildet ist, das elektrische Sendesignal und das elektrische Empfangssignal zu mischen und die Differenz des elektrischen Sendesignals und des elektrischen Empfangssignals verstärkt als Mischsignal auszugeben.

8. FMCW-Distanzmessvorrichtung (12) nach Anspruch 7,
wobei ein erster und zweiter Transimpedanzverstärker (43, 45) dem Differenzverstärker (32) vorgeschaltet sind,
wobei der erste Transimpedanzverstärker (43) ausgebildet ist, das elektrische Sendesignal zu verstärken und das verstärkte elektrische Sendesignal dem Differenzverstärker (32) zuzuführen,
wobei der zweite Transimpedanzverstärker (45) ausgebildet ist, das elektrische Empfangssignal zu verstärken und das verstärkte elektrische Empfangssignal dem Differenzverstärker (32) zuzuführen.

9. FMCW-Distanzmessverfahren, bei welchem:
ein frequenzmodulierter Sendelichtstahl als ein Sendesignal (16) erzeugt und in einen Messbereich entsandt wird, wobei das Sendesignal (16) einen vorbestimmtem Frequenzhub aufweist,
von Objekten (20) in dem Messbereich zurückgestrahltes Licht als Empfangssignal (22) empfangen wird,
zumindest ein Teil des Sendesignals (16) mit dem Empfangssignal (22) gemischt wird, um ein Mischsignal zu generieren,
das Mischsignal in ein binäres Signal umgewandelt wird, wobei das binäre Signal einen vorgegebenen ersten Wert aufweist, wenn ein Mischsignalwert größer als der Schwellenwert ist, wobei das binäre Signal einen vorgegebenen zweiten, von dem ersten Wert unterschiedlichen, Wert aufweist, wenn ein Mischsignalwert kleiner als der Schwellenwert ist, wobei der Schwellenwert vorzugsweise einem Mittelwert des Mischsignals entspricht,
**dadurch gekennzeichnet, dass**
das binäre Signal in den Frequenzbereich transformiert wird und aus dem transformierten Signal die Frequenz des Mischsignals ermittelt wird und basierend auf der ermittelten Frequenz des Mischsignals die Entfernung zu einem jeweiligen Objekt (20) ermittelt wird.

## Claims

1. An FMCW distance measuring device (12) comprising:
a light source, in particular a laser (14), which generates a frequency-modulated transmitted light beam as a transmission signal (16) having a predetermined frequency deviation and emits said frequency modulated transmitted light beam into a measurement range;
a light receiver (18) which is configured to receive light reflected from objects (20) in the measurement range as a received signal (22);
a mixer (24) which is configured to mix at least one portion of the transmission signal (16) with the received signal (22) to generate a mixed signal;
a conversion unit (26) which is configured to convert the mixed signal into a binary signal, wherein the conversion unit comprises at least one comparator or a 1-bit analog-to-digital converter which is configured to convert the mixed signal into a binary signal in that the comparator or the 1-bit analog-to-digital converter compares the mixed signal with a threshold value, wherein the binary signal has a predefined first value when a mixed signal value is greater than the threshold value, wherein the binary signal has a predefined second value, which is different from the first value, when a mixed signal value is less than the threshold value, wherein the threshold value preferably corresponds to a mean value of the mixed signal;
**characterized by**
an evaluation unit (28) which is configured to transform the binary signal into the frequency domain, to determine the frequency of the mixed signal from the transformed signal and to determine the distance from a respective object (20) based on the determined frequency of the mixed signal.

2. An FMCW distance measuring device (12) according to claim 1,
wherein the conversion unit (26) comprises a common-mode control unit which determines the threshold value based on the mixed signal.

3. An FMCW distance measuring device (12) according to claim 1 or 2, wherein the evaluation unit (28) is configured to sample the binary signal at predefined time steps and to output the sampled signal as a bitstream, wherein a sampled value in the bitstream is represented as 1 when the sampled value substantially corresponds to the predefined first value, and a sampled value in the bitstream is represented as 0 when the sampled value substantially corresponds to the predefined second value.

4. An FMCW distance measuring device (12) according to any one of the preceding claims,
wherein the conversion unit (26) and/or evaluation unit (28) is/are configured as part of an FPGA (31).

5. An FMCW distance measuring device (12) according to any one of the preceding claims,
wherein the mixing of the signals takes place optically or electrically.

6. An FMCW distance measuring device (12) according to claim 5,
wherein the mixer (24) comprises a balanced optical heterodyne detector.

7. An FMCW distance measuring device (12) according to claim 5,
wherein the light receiver (18) is configured to convert the received signal (22) into an electrical received signal,
wherein a further light receiver is configured to convert the at least one portion of the transmission signal (16) into an electrical transmission signal, and
the mixer (24) comprises a differential amplifier (32) which is configured to mix the electrical transmission signal and the electrical received signal and to output the difference between the electrical transmission signal and the electrical received signal amplified as a mixed signal.

8. An FMCW distance measuring device (12) according to claim 7,
wherein a first and a second transimpedance amplifier (43, 45) are connected upstream of the differential amplifier (32),
wherein the first transimpedance amplifier (43) is configured to amplify the electrical transmission signal and to supply the amplified electrical transmission signal to the differential amplifier (32),
wherein the second transimpedance amplifier (45) is configured to amplify the electrical received signal and to supply the amplified electrical received signal to the differential amplifier (32).

9. An FMCW distance measuring method, in which:
a frequency-modulated transmitted light beam is produced as a transmission signal (16) and emitted into a measurement range, wherein
the transmission signal (16) has a predetermined frequency deviation, light reflected from objects (20) in the measurement range is received as a received signal (22),
at least one portion of the transmission signal (16) is mixed with the received signal (22) to generate a mixed signal,
the mixed signal is converted into a binary signal, wherein the binary signal has a predefined first value when a mixed signal value is greater than the threshold value, wherein the binary signal has a predefined second value,
which is different from the first value, when a mixed signal value is less than the threshold value, wherein the threshold value preferably corresponds to a mean value of the mixed signal,
**characterized in that**
the binary signal is transformed into the frequency domain, the frequency of the mixed signal is determined from the transformed signal and the distance from a respective object (20) is determined based on the determined frequency of the mixed signal.

## Revendications

1. Dispositif de mesure de distance FMCW (12), comprenant :
une source lumineuse, en particulier un laser (14), qui génère un faisceau lumineux d'émission modulé en fréquence en tant que signal d'émission (16) présentant une excursion de fréquence prédéterminée et l'émet dans une zone de mesure ;
un récepteur de lumière (18) conçu pour recevoir la lumière renvoyée par des objets (20) situés dans la zone de mesure en tant que signal de réception (22) ;
un mélangeur (24) conçu pour mélanger au moins une partie du signal d'émission (16) avec le signal de réception (22) afin de produire un signal mélangé ;
une unité de conversion (26) conçue pour convertir le signal mélangé en un signal binaire, l'unité de conversion comprenant au moins un comparateur ou un convertisseur analogique-numérique à 1 bit, qui est conçu pour convertir le signal mélangé en un signal binaire en comparant, à l'aide du comparateur ou du convertisseur analogique-numérique à 1 bit, le signal mélangé à une valeur seuil, le signal binaire présentant une première valeur prédéfinie lorsqu'une valeur du signal mélangé est supérieure à la valeur seuil, le signal binaire présentant une deuxième valeur prédéfinie, différente de la première valeur, lorsqu'une valeur du signal mélangé est inférieure à la valeur seuil, la valeur seuil correspondant de préférence à une valeur moyenne du signal mélangé ;
**caractérisé par**
une unité d'évaluation (28) qui est conçue pour transformer le signal binaire dans le domaine fréquentiel, pour déterminer la fréquence du signal mélangé à partir du signal transformé et pour déterminer la distance par rapport à un objet respectif (20) sur la base de la fréquence déterminée du signal mélangé.

2. Dispositif de mesure de distance FMCW (12) selon la revendication 1, dans lequel l'unité de conversion (26) comprend une unité de contrôle en mode commun qui détermine la valeur seuil sur la base du signal mélangé.

3. Dispositif de mesure de distance FMCW (12) selon la revendication 1 ou 2, dans lequel l'unité d'évaluation (28) est conçue pour échantillonner le signal binaire à des intervalles de temps prédéfinis et pour délivrer le signal échantillonné en tant que flux binaire, une valeur échantillonnée étant représentée par un 1 dans le flux binaire lorsque la valeur échantillonnée correspond sensiblement à la première valeur prédéfinie, et une valeur échantillonnée est représentée par un 0 dans le flux binaire lorsque la valeur échantillonnée correspond sensiblement à la deuxième valeur prédéfinie.

4. Dispositif de mesure de distance FMCW (12) selon l'une des revendications précédentes,
dans lequel l'unité de conversion (26) et/ou l'unité d'évaluation (28) sont conçues comme faisant partie d'un FPGA (31).

5. Dispositif de mesure de distance FMCW (12) selon l'une des revendications précédentes,
dans lequel le mélange des signaux s'effectue de manière optique ou électrique.

6. Dispositif de mesure de distance FMCW (12) selon la revendication 5, dans lequel le mélangeur (24) comprend un détecteur hétérodyne optique équilibré.

7. Dispositif de mesure de distance FMCW (12) selon la revendication 5, dans lequel le récepteur de lumière (18) est conçu pour convertir le signal de réception (22) en un signal électrique de réception,
un autre récepteur de lumière étant conçu pour convertir au moins une partie du signal d'émission (16) en un signal électrique d'émission, et le mélangeur (24) comprend un amplificateur différentiel (32) qui est conçu pour mélanger le signal électrique d'émission et le signal électrique de réception et pour délivrer en sortie, en tant que signal mélangé, la différence entre le signal électrique d'émission et le signal électrique de réception, amplifiée.

8. Dispositif de mesure de distance FMCW (12) selon la revendication 7, dans lequel un premier et un deuxième amplificateurs à transimpédance (43, 45) sont montés en amont de l'amplificateur différentiel (32),
le premier amplificateur à transimpédance (43) étant conçu pour amplifier le signal électrique d'émission et pour fournir le signal électrique d'émission amplifié à l'amplificateur différentiel (32),
le deuxième amplificateur à transimpédance (45) étant conçu pour amplifier le signal électrique de réception et pour fournir le signal électrique de réception amplifié à l'amplificateur différentiel (32).

9. Procédé de mesure de distance par FMCW, dans lequel :
un faisceau lumineux d'émission modulé en fréquence est généré en tant que signal d'émission (16) et émis dans une zone de mesure, le signal d'émission (16) présentant une excursion de fréquence prédéterminée,
la lumière renvoyée par des objets (20) situés dans la zone de mesure est reçue en tant que signal de réception (22),
au moins une partie du signal d'émission (16) est mélangée avec le signal de réception (22) afin de produire un signal mélangé,
le signal mélangé est converti en un signal binaire, le signal binaire présentant une première valeur prédéfinie lorsqu'une valeur du signal mélangé est supérieure à la valeur seuil, le signal binaire présentant une deuxième valeur prédéfinie, différente de la première valeur, lorsqu'une valeur du signal mélangé est inférieure à la valeur seuil, la valeur seuil correspondant de préférence à une valeur moyenne du signal mélangé,
**caractérisé en ce que**
le signal binaire est transformé dans le domaine fréquentiel et la fréquence du signal mélangé est déterminée à partir du signal transformé, et la distance par rapport à un objet respectif (20) est déterminée sur la base de la fréquence déterminée du signal mélangé.
